# EUROPÄISCHE PATENTSCHRIFT

(11) **EP 0 913 302 B1**
(45) Veröffentlichungstag und Bekanntmachung des Hinweises auf die Patenterteilung: **17.12.2003**
(21) Anmeldenummer: 98119599.3
(22) Anmeldetag: 16.10.1998
(51) Int. Cl.: B60S 1/52

(54) **Durch einen Stellantrieb bewegliche Spritzdüse**
Spray nozzle moved by actuator
Pulverisateur déplacé par actionneur

(30) Priorität: 03.11.1997 DE 19748447
(43) Veröffentlichungstag der Anmeldung: 06.05.1999
(73) Patentinhaber: Siemens Aktiengesellschaft, 80333 München (DE)
(72) Erfinder: Hahn, Thorsten, 34576 Homberg (DE); Rathmann, Klaus-Peter, 60594 Frankfurt (DE); Dederichs, August, 52072 Aachen (DE)

(56) Entgegenhaltungen:
- EP-A- 0 572 147
- EP-A- 0 681 953
- WO-A-97/04875
- DE-C- 4 203 380

## Beschreibung

Die Erfindung betrifft eine durch einen Stellantrieb bewegliche Spritzdüse gemäß den Merkmalen des Oberbegriffs des Patentanspruches 1.

Es ist bekannt, bei Scheinwerfer-Reinigungsanlagen von Kraftfahrzeugen, die ohne mechanische Wischvorrichtungen nur mit dem hohen Druck eines Flüssigkeitsstrahls arbeiten, bewegliche Spritzdüsen vorzusehen, die bei Bedarf mittels eines Stellantriebs aus einer versenkten Ruhestellung in eine Arbeitsstellung verstellt werden.

Oft werden dazu hydraulische Stellantriebe verwendet, wobei der Druck der zu spritzenden Waschflüssigkeit zunächst den federnd in die Ruhestellung vorgespannten Düsenkörper in die Arbeitsstellung schiebt. Erst wenn diese erreicht ist, beginnt der Spritz- und Reinigungsvorgang. Diese Einrichtungen brauchen eine Pumpe mit hoher Druck- und Förderleistung, weil die Antriebsleistung abhängig ist vom in der Waschflüssigkeit aufgebauten Druck. Sie sind auch anfällig gegen Einfrieren bei niederen Temperaturen. In manchen Bauformen werden druckabhängig öffnende Ventile eingesetzt, um die Ausfahrbewegung vorrangig zu steuern und ein vorzeitiges Spritzen bei noch geringem Druck zu verhindern. Auch diese Ventile können vereisen und die Spritzfunktion schwer beeinträchtigen.

Es wurde auch schon vorgeschlagen, die Spritzdüsen mit elektrischen Stellantrieben zu koppeln, wobei der Düsenkörper von einem kleinen, reversierbaren Elektromotor über ein Untersetzungsgetriebe hin und her bewegbar ist. Jedoch sind Elektromotoren nebst Untersetzungsgetriebe relativ teure Aggregate, und sie brauchen leistungsabhängig auch viel Einbauraum, der am Einsatzort - zum Beispiel in einem Stoßfänger oder unter einem Scheinwerfer eines Kraftfahrzeugs - nicht beliebig verfügbar ist.

Aus der WO-A-97/04 875 ist ein Stellantrieb zum Bewegen einer Spritzdüse zum Spritzen einer Waschflüssigkeit in einer Streuscheiben-Reinigungseinrichtung eines Kraftfahrzeugs bekannt. Dabei ist die Spritzdüse an dem einen Ende einer rohrförmigen Kolbenstange angeordnet, die an ihrem anderen Ende einen Kolben trägt, der in einem Zylinder verschiebbar angeordnet ist. Durch eine Druckfeder wird der Kolben in seine eine Endstellung beaufschlagt, in der sich die Spritzdüse in ihrer eingefahrenen Stellung befindet. Die Kolbenstange ist eine beidseitige Kolbenstange, in deren durchgehender Bohrung die Zuleitung der Spritzflüssigkeit zur Spritzdüse geführt ist. Die Bohrung der Kolbenstange ist weiterhin mit dem druckbeaufschlagbaren Zylinderraum verbunden und weist im Bereich der Spritzdüse einen Auslaß auf. Bei Luftbeaufschlagung des Kolbens wird zum einen der Kolben entgegen der Kraft der Feder in seine ausgefahrene Stellung bewegt und zum anderen über die Bohrung der Kolbenstange Luft in den Spritzdüsenbereich geblasen. Zur Beaufschlagung des Kolbens steht nur eine Ringfläche des Kolbens zur Verfügung.

Der Erfindung liegt daher die Aufgabe zugrunde, eine mit einem vom Waschflüssigkeitsdruck unabhängigen Stellantrieb gekoppelte Spritzdüse zu schaffen, die ein geringes Gewicht aufweist. Diese Aufgabe wird erfindungsgemäß mit den Merkmalen des Patentanspruches 1 gelöst. Die Merkmale der Unteransprüche geben vorteilhafte Weiterbildungen dieses Gegenstands an.

Demnach ist der Düsenkörper mit einem Stellglied eines durch Fluiddruck (gasförmiges oder flüssiges Druckmittel oder eine Kombination davon) antreibbaren Stellantriebs gekoppelt. Damit erzielt man große Vorteile, denn derartige Stellantriebe sind mit wenig Aufwand an nahezu beliebige Einbaubedingungen anpaßbar. Sie sind auch frostbeständig und werden nicht durch Schmutz, Wasser oder Eis in ihrer Funktion beeinträchtigt. Bei geringem Gewicht lassen sich hohe Stellkräfte erzielen, und man benötigt nur einen zentralen Druckerzeuger (zum Beispiel eine elektrisch angetriebene Pumpe). Elektromotoren an jeder Düse werden somit vermieden. Auch sind derartige Stellantriebe im Vergleich mit Elektromotoren sehr preiswert herstellbar.

Bei Verwendung einer Rückstellfeder oder im Bidruck-Betrieb braucht der Stellantrieb nur eine einzige Arbeitskammer mit einem Kammeranschluß zu umfassen. Hinsichtlich der Dichtheit bringt es großen Nutzen, wenn die Arbeitskammer allseitig von einer Faltmembran umschlossen ist, welche nur eine einzige Öffnung zum Kammeranschluß hin hat.

Prinzipiell könnte man den Fluiddruck für den Stellantrieb wiederum von der Pumpe für die Waschflüssigkeit über eine separate (Zweig-)Leitung liefern lassen. Von Vorteil ist es jedoch, pneumatische Stellantriebe zu verwenden, weil deren Handhabung und Montage besonders einfach ist.

In einer besonders vorteilhaften Weiterbildung bildet der Düsenkörper selbst das Stellglied des Stellantriebs oder zumindest einen Teil davon. Damit wird die Baugröße der Einheit Spritzdüse-Stellantrieb minimiert.

Letzterer kann doppeltwirkend betrieben werden, das heißt mit Fluiddruck sowohl von der Ruhe- in die Arbeitsstellung als auch umgekehrt aktiv gesteuert werden. Bei Verwendung pneumatischer Stellantriebe kann man diese Betriebsart in einfacher Weise mittels einer Bidruckpumpe realisieren, die eine einzige Arbeitskammer des Stellantriebs über dieselbe Anschlußleitung im Wechsel mit Über- und Unterdruck beaufschlagt. Hierbei kann man auch auf Steuerventile verzichten.

Eine Vereinfachung der Steuerung des Stellantriebs erreicht man, wenn der Düsenkörper mittels einer Rückstellfeder in seine Ruhestellung vorspannbar ist. Es bietet sich dann auch aus Platzgründen an, die Rückstellfeder in den Stellantrieb selbst einzubauen, wo sie unmittelbar auf das Stellglied einwirken kann.

Besonders einfach werden Dichtprobleme vermieden, wenn die Öffnung als in den bodenseitigen Kammeranschluß einsetzbarer Fortsatz ausgebildet ist.

Besonders platz- und materialsparend sowie montagefreundlich wird die Spritzdüse, wenn der Düsenkörper nebst einem Leitungsabschnitt und einem Steckanschluß einstückig in das Stellglied integriert ist.

Für die Fertigung und Montage bringt eine Teileverringerung große Vorteile, die erreicht wird, wenn das Stellglied einstückig über ein Filmscharnier mit einem Kammerboden verbunden ist, welcher Rasthaken zum Festlegen des Stellantriebs, insbesondere in einem Stoßfängerträger, und einen Kammeranschluß zum fluidischen Anschließen der Arbeitskammer aufweist. In dieser Ausführung ist die Rückstellfeder vorzugsweise im Bereich des Filmscharniers anzuordnen.

Eine gegen Beschädigungen gut geschützte Unterbringung der Faltmembran erreicht man, indem der Kammerboden Seitenwände hat, welche die Faltmembran seitlich umschließen und auf deren Oberseite das Stellglied in Ruhestellung deckelartig aufliegt. Durch diese Auflage wird ferner ein Quetschen der Faltmembran verhindert.

Einen pneumatischen Stellantrieb für die Spritzdüse kann man auch als Membrankolben-Stellantrieb ausführen, weil diese bewährte Bauart besonders leicht und wartungsfrei ist.

In besonders vorteilhafter Ausbildung koppelt man mehrere Spritzdüsen mit einem Stellglied. Damit erreicht man bei unterschiedlicher Orientierung der Spritzdüsen einen größeren Spritzwinkel, als mit einer Einzeldüse erzielt werden kann.

Den Rückstellvorgang eines federrückgestellten pneumatischen Stellantriebs kann man beschleunigen, indem man die Arbeitskammer über ein normalerweise zur Umgebung offenes Ventil belüftet, welches nur bei Betätigung der Spritzdüse eine Verbindung zwischen der Arbeitskammer und der Luftpumpe herstellt. Das Ventil kann in die Druckluftleitung nahe dem Stellantrieb eingebaut sein.

Einen bedeutenden Vorteil erzielt man insbesondere bei in Ruhestellung vollständig versenkter Düse, wenn die momentane Stellung des Düsenkörpers mittels einer Einrichtung zur Positionserfassung an die Steuerung der Waschmittelpumpe rückgeführt wird. Damit läßt sich erreichen, daß nur bei zumindest über einen vorbestimmbaren Hubweg ausgefahrener Düse Waschflüssigkeit gespritzt wird. Es wird damit vermieden, daß der normalerweise begrenzte Vorrat an Waschflüssigkeit unnütz bei nicht ausgefahrener Düse verbraucht wird.

Weitere Einzelheiten und Vorteile des Gegenstands der Erfindung gehen ohne Einschränkungen aus der Zeichnung eines Ausführungsbeispiels und der folgenden Beschreibung hervor.

Es zeigen:
- Figur 1:: eine Schnittansicht einer Spritzdüse, die eng an einen pneumatischen Stellantrieb gekoppelt ist,
- Figur 2:: eine Ansicht des Stellglieds des pneumatischen Stellantriebs aus Figur 1,
- Figur 3:: eine Schnittansicht einer Variante, bei der die Spritzdüse selbst und ein Abschnitt ihrer Zuleitung nebst Steckanschluß einstückig in das Stellglied integriert sind,
- Figur 4:: eine Teilansicht eines mit festen Seitenwänden versehenen Kammerbodens des Stellantriebs,
- Figur 5:: eine Schnittansicht einer besonders zweckmäßig ausgebildeten Faltmembran,
- Figur 6:: eine Düse als Einbauteil in einem Stoßfänger.

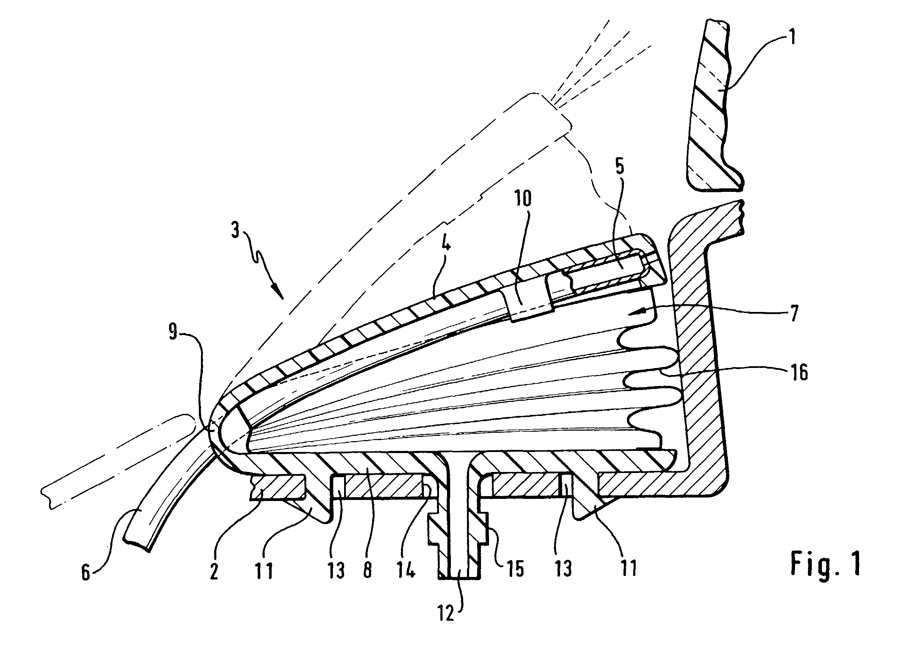

Gemäß Figur 1 befindet sich in unmittelbarer Nachbarschaft zu einer Scheinwerfer-Streuscheibe 1 und befestigt an einen Stoßfängerträger 2 eines weiter nicht dargestellten Kraftfahrzeugs ein pneumatischer Stellantrieb 3. Dessen Stellglied 4 trägt eine Spritzdüse 5 zum Versprühen einer unter Druck stehenden Waschflüssigkeit, die ihr über eine Schlauchleitung 6 von einer nicht dargestellten Pumpe zuführbar ist.

Der Stellantrieb 3 bildet eine im Querschnitt prismatische Arbeitskammer 7, deren Oberseite vom Stellglied 4 abgedeckt ist, und deren Unterseite ein Kammerboden 8 ist. Das Stellglied 4 ist einstückig mit dem Kammerboden 8 vorzugsweise über ein Filmscharnier 9 verbunden. Die Schlauchleitung 6 ist durch eine Öffnung im Kniebereich des Filmscharniers 9 in die Arbeitskammer 7 eingeführt. Das hat den Vorteil, daß die Schlauchleitung beim Bewegen des Stellglieds, dessen Ruhestellung hier durchgezogen und dessen Arbeitsstellung gestrichelt gezeichnet sind, keine oder nur vernachlässigbare Bewegungen in Längsrichtung ausführt.

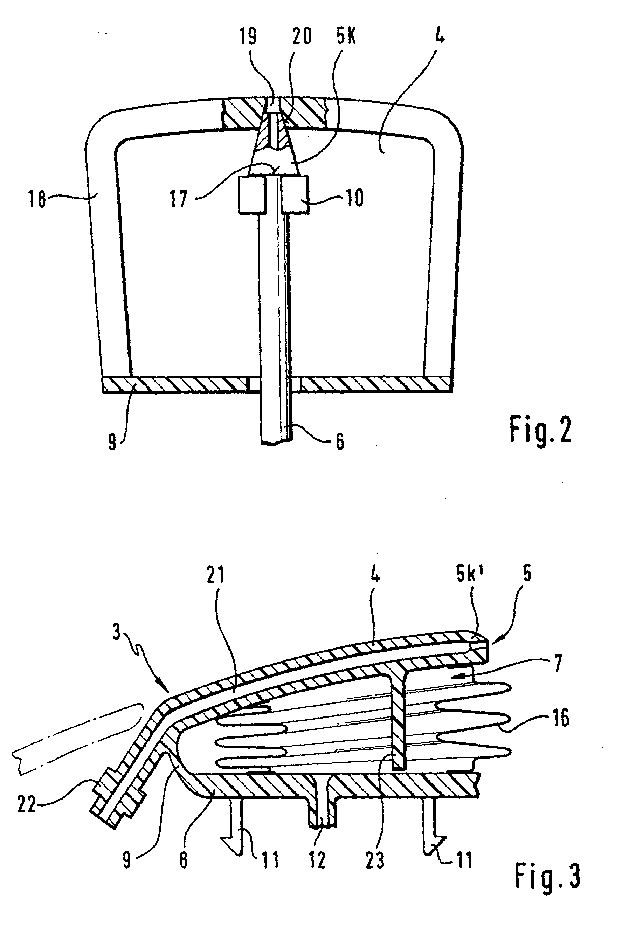

Sie wird am Stellglied 4 durch nur angedeutete Clipsverbindungen 10 gehalten, die auch die Spritzdüse 5 axial festzulegen haben. Man wird diese Clipsverbindungen zweckmäßig so ausführen, daß die Schlauchleitung mit der an ihrem vorderen Ende befindlichen Spritzdüse 5 voran längs durch die erwähnte Öffnung eingeschoben und unmittelbar vor dem Erreichen der Endstellung verrastet wird, wobei eine stufige Querschnittserweiterung im Übergang von der Schlauchleitung zur Düse als axiales Widerlager gegen unbeabsichtigtes Herausziehen dient (siehe auch Figur 2).

An die Außenseite des Kammerbodens 8 sind zwei oder mehr Rasthaken 11 und ein Kammeranschluß 12 einstückig angeformt. Man kann ferner den Kammerboden und das Stellglied einstückig aus einem geeigneten Kunststoff spritzen. Die Rasthaken 11 können in entsprechende Ausnehmungen 13 des Stoßfängerträgers 2 eingeclipst werden, wobei gleichzeitig der Kammeranschluß 12 durch eine entsprechende Bohrung 14 geführt wird. Der Kammeranschluß ist hier als Rohrstutzen ausgebildet und hat an seinem Außenumfang einen Ringbund 15, der als Widerlager zum steckbaren Anschließen einer pneumatischen Druckleitung dient.

Als Begrenzung der Arbeitskammer zu den drei verbleibenden Seiten ist eine balgförmige Ziehharmonika- oder Faltmembran 16 aus einem hochelastischen Material vorgesehen, die randseitig in geeigneter Weise mit den Innenkanten des Stellglieds und des Kammerbodens druckdicht verbunden ist.

Man kann diese Membran bis in den Kehlenbereich des Filmscharniers hineinführen, so daß sie dort offen ist und insgesamt etwa eine Fächerform hat. Dann gibt es keine eigene Durchführung für die Schlauchleitung. Man kann die Membran aber auch schlauchförmig (als Wellschlauch mit entsprechendem Durchmesser) ausführen. Sie ist dann auch im Kehlenbereich des Filmscharniers in sich geschlossen und hält einen geringen Abstand ein (siehe auch Figur 3). Bei einer Leitungsführung gemäß Figur 1 muß man dann aber eine dichte Durchführung für die Schlauchleitung vorsehen. Diese kann in Form einer einstückig an die Faltmembran angeformten Lippendichtung einfach realisiert werden. Nach dem axialen Einschieben der Schlauchleitung liegt die Dichtlippe im Innenraum der Faltmembran nach einwärts gezogen am Umfang der Schlauchleitung an, so daß ihre Anpreßkraft vom Druckaufbau erhöht wird.

Bei Druckbeaufschlagung dehnen sich die Falten der Faltmembran 16 aus. Zweckmäßig wird sie an ihrem Außenumfang zum Beispiel durch entsprechende Wände des Stoßfängerträgers 2, wie in der Zeichnung erkennbar, gegen Ausstülpen zur Seite abgestützt. Entsprechende Wände können aber auch seitlich an den Kammerboden 8 angeformt sein, ohne die Beweglichkeit des Stellglieds zu behindern, so daß die karosserieseitigen Vorleistungen minimiert werden können. Unter Druck wird das Stellglied 4 in die gestrichelt gezeigte Stellung angehoben, wobei der maximale Hub durch gegenseitige Abstimmung der Membranelastizität und des pneumatischen Überdrucks einstellbar ist. Gegebenenfalls kann man den Maximalhub auch durch in die Faltmembran eingespritzte Zugbänder oder durch sonstige Anschläge begrenzen. Zum Rückstellen in die Ruhestellung kann man die Arbeitskammer 7 mit Unterdruck beaufschlagen. Man kann auch die Federeigenschaft der Faltmembran 16 selbst und/oder des Filmscharniers 9 als Rückstellkraft nutzen, oder eine geeignete separate Rückstellfeder vorsehen, die zum Beispiel als Drehfeder oder Schenkelfeder vorzugsweise im Bereich des Filmscharniers angeordnet und gegebenenfalls auch mit eingespritzt werden kann.

Figur 2 verdeutlicht eine Ausführung zum Festlegen der Spritzdüse 5 und der Schlauchleitung 6 im Stellglied 4. Das Filmscharnier 9 ist hier aufgeschnitten, man blickt auf die zur Arbeitskammer hin weisende Unterseite des Stellglieds 4 mit angeformter Clipsverbindung 10. Ein Düsenkörper 5k der Spritzdüse 5 bildet hier im Übergang von der Schlauchleitung eine Stufe 17, die als Widerlager gegen Herausziehen von der Clipsverbindung 10 hintergriffen wird. Man erkennt, daß die Fläche des Stellglieds, die auch die Wirkfläche des fluidischen Antriebsdrucks ist, im Vergleich zur Düse selbst relativ groß ist. Damit werden auch bei widrigen Witterungsverhältnissen (Schnee, Eis) hinreichend große Stellkräfte zum Ausfahren der Spritzdüse erreicht.

Man erkennt ferner, daß am äußeren Innenrand des Stellglieds 4 ein bis in die Kehle des Filmscharniers umlaufender glatter Steg 18 als Kontakt- und Verbindungsfläche für den Rand der Faltmembran 16 vorgesehen ist. Eine Auslaßöffnung 19 für den Waschstrahl ist in diesen Steg mit einem Zentrierkonus 20 für die Spitze des Düsenkörpers 5 eingeformt, so daß hierfür keine eigene Öffnung in der Faltmembran vorzusehen ist. Es versteht sich, daß bei Bedarf innerhalb des Stellglieds auch mehr als eine Spritzdüse untergebracht werden kann.

Eine bevorzugte Variante der Anordnung ist in Figur 3 dargestellt. Ein Leitungsabschnitt 21 und ein integrierter Düsenkörper 5k' sind hier direkt in das Stellglied 4 eingeformt, wobei ein im Bereich des Filmscharniers 9 ebenfalls angeformter Steckanschluß 22 das Anschließen einer nicht gezeigten Zufuhrleitung für die Waschflüssigkeit ermöglicht. So bildet der Düsenkörper 5k' einen Teil des Stellglieds selbst.

Der Steckanschluß 22 ist winklig zum Leitungsabschnitt 21 ausgerichtet, damit man ihn und die anzuschließende Leitung problemlos unter einem angrenzenden Stoßfänger oder sonstigen Karosserieteil, wie strichpunktiert angedeutet, verdecken kann. Man kann ihn, wenn einstückiges Anspritzen problematisch sein sollte, auch separat fertigen und hernach in eine gespritzte Paßbohrung des Stellglieds 4 an der gezeigten Stelle druckdicht einsetzen (zum Beispiel Reibschweißen, Kleben). Im übrigen kann man bei Bedarf den Steckanschluß 22, der beim Ausfahren des Stellglieds eine Schwenkbewegung um einen kleinen Winkel ausführt, als Hubbegrenzer nutzen, indem man ihn zum Beispiel gegen einen an den Kammerboden 8 anzuformenden Fortsatz anlaufen läßt.

Natürlich können auch in der Ausführung gemäß Figur 3 mehrere Düsenkörper 5k' und Leitungsabschnitte 21 in das Stellglied 4 integriert werden, deren Verzweigung zweckmäßig nach dem Steckanschluß 22 innerhalb des Stellglieds anzuordnen ist.

Die Faltmembran 16 ist hier, wie schon erwähnt, ein kurzer Wellschlauchabschnitt und umschließt die Arbeitskammer 7 ringförmig. Bei Druckzufuhr längt sich die Faltmembran, wobei das Filmscharnier 9 die notwendige Schwenkbewegung des Stellglieds 4 erzwingt, so daß die Spritzdüse 5' in ihre aufgerichtete Arbeitsstellung gebracht wird.

An die Unterseite des Stellglieds 4 ist ein in die Arbeitskammer 7 hängender Abstandhalter 23 angeformt, der als Anschlag für das Einstellen der Ruhelage des Stellantriebs 3 dient und im übrigen die Faltmembran vor versehentlichem Quetschen während der Montage und im Betrieb schützt. Der Abstandhalter kann natürlich auch stehend an den Kammerboden 8 angeformt werden.

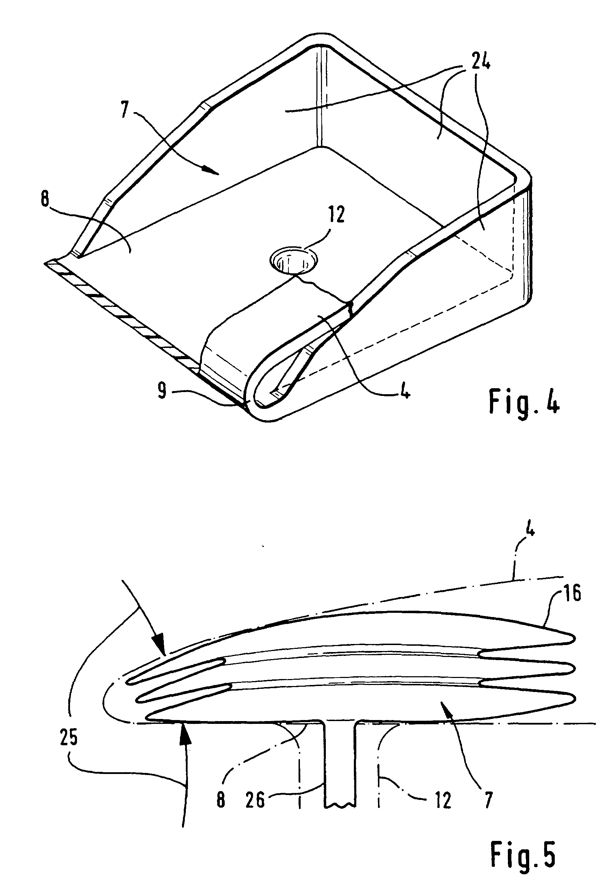

Abweichend von der Darstellung können Abstandhalter auch außerhalb des von der Faltmembran 16 umschriebenen Raums angeordnet sein. In noch weiterer Abwandlung kann gemäß Figur 4 der Kammerboden 8, wie bereits erwähnt, feste Seitenwände 24 zum Stützen der Faltmembran gegen Ausstülpen nach außen aufweisen. Diese können auch die Funktion des Abstandhalters 23 übernehmen. Der Kammerboden 8 hat dann, wie gezeigt, die Gestalt eines prismatischen Kastens, an dessen spitze Seite sich das Filmscharnier 9 anschließt. Die Unterseite des hier großenteils weggeschnittenen Stellglieds 4 liegt dann in Ruhelage als Deckel auf den Oberkanten der Seitenwände 24 auf. Es ist abweichend von der Darstellung nicht notwendig, die Seitenwände auf den drei Seiten abseits des Filmscharniers durchlaufen zu lassen, sondern sie können gegebenenfalls materialsparend auch als kurze Abschnitte ausgeführt werden.

In einer Konfiguration gemäß Figur 4 kann die am Stellglied 4 anliegende Seite der Faltmembran 16 gemäß Figur 5 vollständig geschlossen sein. Man kann sie flächig mit der Unterseite des hier nur strichpunktiert angedeuteten Stellglieds 4 verbinden. Eine zugfeste Verbindung der Faltmembran 16 mit dem Stellglied 4 kann aber wegfallen, wenn letzteres mit Hilfe einer Rückstellfeder (die hier durch Pfeile 25 repräsentiert ist) zuverlässig in seine versenkte Ruhestellung vorgespannt ist. Dann muß die zum Stellglied 4 hin abgeschlossene Faltmembran 16 nur zum Anheben des Stellglieds Druckkräfte gegen dieses ausüben. Ihre Öffnung zum Kammeranschluß 12 hin ist als schlauchartiger Fortsatz 26 ausgebildet und in den Kammeranschluß einführ- oder einknöpfbar, so daß die Faltmembran auch auf ihrer auf dem Kammerboden 8 aufliegenden Seite nahezu vollständig geschlossen ist. Die Arbeitskammer 7 ist dann allseitig nur von der Wand der Faltmembran umschlossen, so daß keinerlei Abdichtungsprobleme entstehen. Bei geeigneter Ausbildung des Fortsatzes 26 kann dieser auch als Dichtung für die anzuschließende Steckverbindung genutzt werden.

Die Herstellung der Spritzdüse nebst Stellantrieb ist dann sehr einfach: Zunächst werden separat einerseits gemäß Figur 5 die Faltmembran 16 nebst Fortsatz 26, andererseits die Einheit aus dem Stellglied 4 (nebst Düsenkörper 5k', Leitungsabschnitt 21 und Steckanschluß 22), dem Filmscharnier 9 und dem Kammerboden 8 (nebst Rasthaken 11, Kammeranschluß 12 und Seitenwänden 24) sowie der Rückstellfeder 25 gefertigt. Dann wird die Faltmembran 16 in den Raum zwischen dem vorübergehend von Hand gegen die Rückstellfeder 25 von den Seitenwänden 24 abgehobenen Stellglied 4 und dem Kammerboden 8 eingesetzt, wobei der Fortsatz 26 in den Kammeranschluß 12 einzuknöpfen ist. Danach ist die Baueinheit "Spritzdüse mit Stellantrieb" montagefertig und kann in die Einbaulage gemäß Figur 1 einfach eingerastet werden. Abschließend müssen nur noch die Luftdruck- und Waschmittel-Anschlüsse aufgesteckt werden.

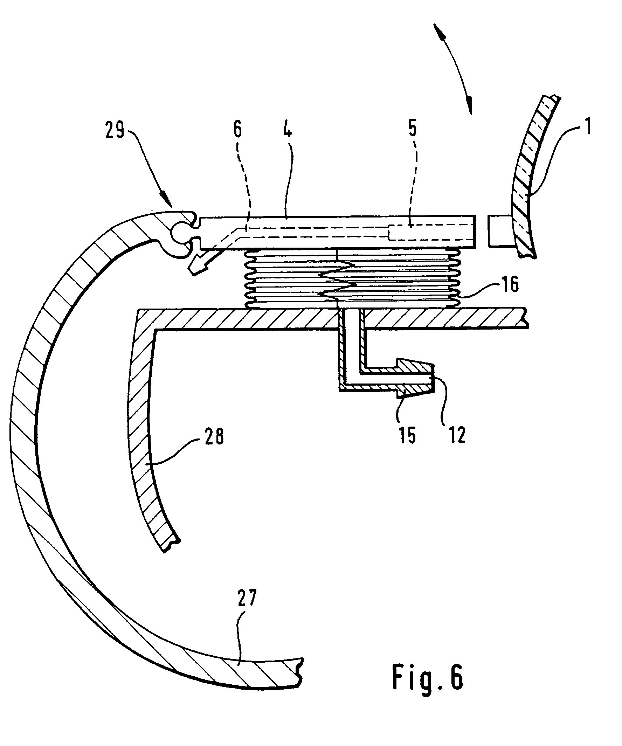

Figur 6 zeigt eine Düse 4 als Einbauteil in einem Stoßfänger. In einem Stoßfänger 27, der von einem Träger 28 getargen wird, ist das Stellglied 4 mit der Spritzdüse 5 flächig und ausfahrbar montiert. Dies geschieht wiederum mittels des Filmscharniers 9 oder auch - wie in Figur 6 gezeigt - durch ein Rastgelenk 29. Dies hat den Vorteil der schnellen Montage und Auswechselbarkeit und erlaubt einen flächigen und ebenen Abschluß der Oberfläche des Stellgliedes 4 mit der Oberfläche des Stoßfängers 27. Dies führt zu einer geringeren Wirbelbildung und somit zur Vermeidung von Windgeräuschen. Die Faltmembran 16 ist zwischen der Unterseite des Stellgliedes 4 und der Oberseite des Trägers 28 angeordnet. Die Integration einer Heizung für die Spritzdüse ist hier bei Anwendung insbesondere einer Flächenheizung (zum Beispiel Flächenheizelement, Heizfolie zum Aufkleben) denkbar.

Man erhält mit diesen Ausführungen eine äußerst kompakte, leichte und dennoch mit hohen Stellkräften arbeitende Baueinheit aus Spritzdüse und Stellantrieb, die mit geringem Aufwand an nahezu beliebige Anwendungs- und Einbaufälle angepaßt werden kann und ein gefälliges Erscheinungsbild abgibt. Fahrzeugseitige Vorleistungen werden auf eine unerläßliches Minimum (eine Aufnahme für den Stellantrieb sowie die notwendigen Fluidanschlüsse) beschränkt.

### Bezugszeichenliste:

- 1.: Scheinwefer-Streuscheibe
- 2.: Stoßfängerträger
- 3.: pneumatischer Stellantrieb
- 4.: Stellglied
- 5.: Spritzdüse (5k: Düsenkörper, 5k': integrierter Düsenkörper)
- 6.: Schlauchleitung
- 7.: Arbeitskammer
- 8.: Kammerboden
- 9.: Filmscharnier
- 10.: Clipsverbindungen
- 11.: Rasthaken
- 12.: Kammeranschluß
- 13.: Ausnehmungen
- 14.: Bohrung
- 15.: Ringbund
- 16.: Faltmembran
- 17.: Stufe/Widerlager
- 18.: Steg
- 19.: Austrittsöffnung
- 20.: Zentrierkonus
- 21.: Leitungsabschnitt
- 22.: Steckanschluß
- 23.: Abstandhalter
- 24.: feste Seitenwände
- 25.: Rückstellfeder
- 26.: schlauchartiger Fortsatz
- 27.: Stoßfänger
- 28.: Träger
- 29.: Rastgelenk

## Patentansprüche

1. Durch einen Stellantrieb (3) beweglichen Spritzdüse, insbesondere zum Spritzen einer Waschflüssigkeit in einer Streuscheiben-Reinigungseinrichtung eines Kraftfahrzeugs, wobei ein Düsenkörper der Spritzdüse (5) zwischen einer Ruhe- und einer Arbeitsstellung hin und her stellbar ist, der Stellantrieb unabhängig vom in der Düse herrschenden Druck der Waschflüssigkeit arbeitet und der Düsenkörper (5,5k) mit einem Stellglied eines durch Fluiddruck antreibbaren Stellantriebs gekoppelt ist, der eine einzige Arbeitskammer (7) mit einem Kammeranschluß umfaßt, **dadurch gekennzeichnet, daß** die Arbeitskammer (7) allseitig von einer Faltenmembran (16) umschlossen ist, welche eine einzige Öffnung zum Kammeranschluß (12) hin hat.

2. Spritzdüse nach Anspruch 1, **dadurch gekennzeichnet, daß** der Düsenkörper (5k') selbst zumindest einen Teil des Stellglieds (4) des Stellantriebs (3) bildet.

3. Spritzdüse nach Anspruch 1 oder 2, **dadurch gekennzeichnet, daß** das Stellglied (4) mittels einer Rückstellfeder (25) in seine Ruhestellung vorspannbar ist.

4. Spritzdüse nach Anspruch 3, **dadurch gekennzeichnet, daß** die Rückstellfeder (25) in den Stellantrieb (3) eingebaut ist.

5. Spritzdüse nach einem der vorhergehenden Ansprüche, **dadurch gekennzeichnet, daß** der Stellantrieb (3) pneumatisch betreibbar ist.

6. Spritzdüse nach einem der vorhergehenden Ansprüche, **dadurch gekennzeichnet, daß** die Öffnung als in den Kammeranschluß (12) einsetzbarer Fortsatz (26) ausgebildet ist.

7. Spritzdüse nach einem der vorhergehenden Ansprüche, **dadurch gekennzeichnet, daß** der Düsenkörper (5k') nebst einem Leitungsabschnitt (21) und einem Steckanschluß (22) einstückig in das Stellglied (4) integriert ist.

8. Spritzdüse nach einem der vorhergehenden Ansprüche, **dadurch gekennzeichnet, daß** das Stellglied (4) einstückig über ein Filmscharnier (9) mit einem Kammerboden (8) verbunden ist, welcher Rasthaken (11) bzw. Mittel zum Festlegen des Stellantriebs (3), insbesondere in einem Stoßfängerträger (2), und einen Kammenranschluß (12) bzw. Mittel zum fluidischen Anschließen der Arbeitskammer (7) aufweist.

9. Spritzdüse nach den Ansprüchen 3 und 8, **dadurch gekennzeichnet, daß** die Rückstellfeder (25) im Bereich des Filmscharniers (9) angeordnet ist.

10. Spritzdüse nach Anspruch 8 oder 9, **dadurch gekennzeichnet, daß** der Kammerboden (8) Seitenwände (24) hat, welche die Faltmembran (16) seitlich umschließen und auf deren Oberseite das Stellglied (4) in Ruhestellung aufliegt.

11. Spritzdüse nach einem der vorhergehenden Ansprüche, **dadurch gekennzeichnet, daß** der Stellantrieb einen mit dem Stellglied gekoppelten Membrankolben umfaßt.

12. Spritzdüse nach einem der vorhergehenden Ansprüche, dadurch ge kenn zeichnet, daß mehrere Düsenkörper (5k; 5k') mit einem Stellglied (4) gekoppelt sind.

13. Spritzdüse nach den Ansprüchen 7 und 12, **dadurch gekennzeichnet, daß** die Verzweigung zu den unterschiedlichen Düsenkörpern (5k; 5k') innerhalb des Stellglieds (4) liegt.

14. Spritzdüse nach Anspruch 12 oder 13, **dadurch gekennzeichnet, daß** die Düsenkörper (5k; 5k' ) und die von ihnen getragenen Düsen in unterschiedliche Richtungen orientiert sind.

15. Spritzdüse nach einem der vorhergehenden Ansprüche, **dadurch gekennzeichnet, daß** die Arbeitskammer (7) eines federrückgestellten pneumatischen Stellantriebs (3) über ein normalerweise zur Umgebung offenes Ventil belüftbar ist, welches nur bei Betätigung der Spritzdüse eine Verbindung zwischen der Arbeitskammer und der Luftpumpe herstellt.

16. Spritzdüse nach Anspruch 15, **dadurch gekennzeichnet, daß** das Ventil in die Druckluftleitung nahe dem Stellantrieb (3) eingebaut ist.

17. Spritzdüse nach einem der vorhergehenden Ansprüche, **dadurch gekennzeichnet, daß** eine momentane Stellung des Düsenkörpers (5k; 5k') mittels einer Einrichtung zur Positionserfassung des Stellantriebs (4) an die Steuerung der Waschmittelpumpe rückgeführt wird.

## Claims

1. Spray nozzle which can be moved by an actuator (3), in particular for the spraying of a washing liquid in a lens-cleaning device of a motor vehicle, a nozzle body of the spray nozzle (5) being movable to and fro between a rest position and a working position, the actuator operating independently of the washing-liquid pressure prevailing in the nozzle, and the nozzle body (5, 5k) being coupled to an actuating element of an actuator which can be driven by fluid pressure and comprises a single working chamber (7) with a chamber connection, **characterized in that** the working chamber (7) is enclosed on all sides by a folded diaphragm (16) which has a single opening towards the chamber connection (12).

2. Spray nozzle according to Claim 1, **characterized in that** the nozzle body (5k') itself forms at least part of the actuating element (4) of the actuator (3).

3. Spray nozzle according to Claim 1 or 2, **characterized in that** the actuating element (4) can be prestressed into its rest position by means of a resetting spring (25).

4. Spray nozzle according to Claim 3, **characterized in that** the resetting spring (25) is fitted into the actuator (3).

5. Spray nozzle according to one of the preceding claims, **characterized in that** the actuator (3) can be operated pneumatically.

6. Spray nozzle according to one of the preceding claims, **characterized in that** the opening is designed as an extension (26) which can be inserted into the chamber connection (12).

7. Spray nozzle according to one of the preceding claims, **characterized in that** the nozzle body (5k') is integrated together with a line section (21) and a plug-type connection (22) as a single component in the actuating element (4).

8. Spray nozzle according to one of the preceding claims, **characterized in that** the actuating element (4) is connected as a single component via a film hinge (9) to a chamber base (8) which has latching hooks (11) or means for securing the actuator (3), in particular in a bumper support (2), and a chamber connection (12) or means for the fluidic connection of the working chamber (7).

9. Spray nozzle according to Claims 3 and 8, **characterized in that** the resetting spring (25) is arranged in the region of the film hinge (9).

10. Spray nozzle according to Claim 8 or 9, **characterized in that** the chamber bottom (8) has side walls (24) which laterally enclose the folded diaphragm (16) and, in the rest position, the actuating element (4) rests on the upper side of the said side walls.

11. Spray nozzle according to one of the preceding claims, **characterized in that** the actuator comprises a diaphragm piston which is coupled to the actuating element.

12. Spray nozzle according to one of the preceding claims, **characterized in that** a plurality of nozzle bodies (5k; 5k') are coupled to an actuating element (4).

13. Spray nozzle according to Claims 7 and 12, **characterized in that** the branching to the various nozzle bodies (5k; 5k') is situated within the actuating element (4).

14. Spray nozzle according to Claim 12 or 13, **characterized in that** the nozzle bodies (5k; 5k') and the nozzles carried by them are orientated in different directions.

15. Spray nozzle according to one of the preceding claims, **characterized in that** the working chamber (7) of a spring-reset pneumatic actuator (3) can be ventilated via a valve, which is normally open to the surroundings and does not produce a connection between the working chamber and the air pump until the spray nozzle is actuated.

16. Spray nozzle according to Claim 15, **characterized in that** the valve is fitted into the compressed air line close to the actuator (3).

17. Spray nozzle according to one of the preceding claims, **characterized in that** a position of the nozzle body (5k; 5k') at a particular instant is fed back to the control system of the washing-agent pump by means of a device for detecting the position of the actuator (4).

## Revendications

1. Pulvérisateur déplacé par un actionneur (3), en particulier pour pulvériser un liquide de lavage dans un dispositif de nettoyage de verres diffusants d'un véhicule, un corps de pulvérisateur (5) pouvant se déplacer selon un mouvement de va-et-vient entre une position de repos et une position de travail, l'actionneur opérant indépendamment de la pression du liquide de lavage régnant dans le pulvérisateur et le corps de pulvérisateur (5, 5k) étant couplé à un organe de positionnement d'un actionneur actionné par une pression de fluide, lequel comprend une seule chambre de travail (7) avec un raccord de la chambre, **caractérisé en ce que** la chambre de travail (7) est entourée de toutes parts par une membrane pliante (16) présentant un seul orifice dirigé vers le raccord (12) de la chambre.

2. Pulvérisateur selon la revendication 1, **caractérisé en ce que** le corps de pulvérisateur (5k') même constitue une partie de l'organe de positionnement (4) de l'actionneur (3).

3. Pulvérisateur selon la revendication 1 ou 2, **caractérisé en ce que** l'organe de réglage (4) peut être mis dans sa position de repos par précontrainte exercée au moyen d'un ressort de rappel (25).

4. Pulvérisateur selon la revendication 3, **caractérisé en ce que** le ressort de rappel (25) est monté dans l'actionneur (3).

5. Pulvérisateur selon l'une des revendications précédentes, **caractérisé en ce que** l'actionneur (3) peut être actionné pneumatiquement.

6. Pulvérisateur selon l'une des revendications précédentes, **caractérisé en ce que** l'orifice est réalisé sous la forme d'un prolongement (26) insérable dans le raccord (12) de la chambre.

7. Pulvérisateur selon l'une des revendications précédentes, **caractérisé en ce que** le corps de pulvérisateur (5k') ainsi qu'un tronçon de conduite (21) et un raccord enfichable (22) sont intégrés d'une seule pièce dans l'organe de positionnement (4).

8. Pulvérisateur selon l'une des revendications précédentes, **caractérisé en ce que** l'organe de positionnement (4) est assemblé d'une seule pièce avec un fond (8) de la chambre par l'intermédiaire d'une charnière film (9), ledit fond présentant des crochets d'enclenchement (11) resp. des moyens de fixation de l'actionneur (3), en particulier dans un support de pare-chocs (2), et un raccord (12) de la chambre resp. des moyens de raccordement fluidique de la chambre de travail (7).

9. Pulvérisateur selon les revendications 3 et 8, **caractérisé en ce que** le ressort de rappel (25) est situé dans la zone occupée par la charnière film (9).

10. Pulvérisateur selon la revendication 8 ou 9, **caractérisé en ce que** le fond (8) de la chambre a des parois latérales (24) qui entourent latéralement la membrane pliante (16) et sur la face supérieure desquelles est appliqué l'organe de positionnement (4) en position de repos.

11. Pulvérisateur selon l'une des revendications précédentes, **caractérisé en ce que** l'actionneur comprend un piston à membrane couplé à l'organe de positionnement.

12. Pulvérisateur selon l'une des revendications précédentes, **caractérisé en ce que** plusieurs corps de pulvérisateur (5k; 5k') sont couplés à un organe de positionnement (4).

13. Pulvérisateur selon les revendications 7 et 12, **caractérisé en ce que** l'embranchement vers les différents corps de pulvérisateur (5k; 5k') se trouve à l'intérieur de l'organe de positionnement (4).

14. Pulvérisateur selon la revendication 12 ou 13, **caractérisé en ce que** les corps de pulvérisateur (5k; 5k') et les pulvérisateurs qu'ils portent sont orientés dans différentes directions.

15. Pulvérisateur selon l'une des revendications précédentes, **caractérisé en ce que** la chambre de travail (7) d'un actionneur (3) pneumatique rappelé par ressort peut être aéré par l'intermédiaire d'une soupape normalement ouverte sur l'environnement, laquelle n'établit une liaison entre la chambre de travail et la pompe à air qu'en cas d'actionnement du pulvérisateur.

16. Pulvérisateur selon la revendication 15, **caractérisé en ce que** la soupape est montée dans la conduite d'air comprimé à proximité de l'actionneur (3).

17. Pulvérisateur selon l'une des revendications précédentes, **caractérisé en ce qu'**une position momentanée du corps de pulvérisateur (5k; 5k') est asservie à la commande de la pompe à moyen de lavage au moyen d'un dispositif de détection de la position de l'actionneur (4).
